# EUROPEAN PATENT APPLICATION

(11) **EP 3 985 247 A1**
(43) Date of publication of application: **20.04.2022**
(21) Application number: 20201915.4
(22) Date of filing: 15.10.2020
(51) Int. Cl.: F03D 7/02

(54) **METHOD OF CONTROLLING A WIND TURBINE**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention describes a method of controlling a wind turbine (1), the wind turbine (1) comprising a support assembly (14, 15) and an aerodynamic rotor (11, 12) with a plurality of rotor blades (11), which method comprises the steps of determining a maximum fatigue load (FLₘₐₓ) that would act on the support assembly (14, 15) in the absence of aerodynamic damping by the aerodynamic rotor (11, 12); determining a mitigated idle mode pitching angle (β_{slow}), which mitigated idle mode pitching angle (β_{slow}) is smaller than the feathering angle (βₘₐₓ); detecting a condition that requires the wind turbine to be placed in an idle mode (M_{idle}) and subsequently commanding a rotor blade pitch system (2) to pitch the rotor blades (11) to the mitigated idle mode pitching angle (β_{slow}). The invention further describes a wind turbine.

## Description

The invention describes a method of controlling a wind turbine; and a wind turbine.

The supporting structure of a wind turbine must be constructed to bear the weight of the components that it supports, as well as wind loading, wave loading, seismic loading, etc. When a wind turbine is operational, its aerodynamic rotor (the rotor blades and the hub) is made to rotate, with the result that wind energy is converted to rotational energy of the generator rotor and ultimately to electrical energy for export to the grid. Effectively, the rotating aerodynamic rotor and the ensuing energy conversion has the effect of aerodynamic damping of the supporting structure. Adjusting the rotor blade pitch angle and/or generator torque can effectively counteract tower oscillations during a normal mode of operation of the wind turbine.

However, various situations may result in a wind turbine being non-operational. For example, a failure may result in the wind turbine being disconnected from the grid, or unable to generate power. In such a situation, it is important to avoid uncontrolled rotation of the aerodynamic rotor, which could result in catastrophic failure. Therefore, in any situation requiring "passive idling" of a wind turbine, it is usual to pitch the rotor blades to a largest possible angle so that each airfoil is parallel to the incoming airflow. This pitch position, in which the rotor blades are said to be "feathered", effectively prevents the aerodynamic rotor from turning.

There are various ways of addressing the problem of how to reduce loading on a non-operational wind turbine. In one approach, an off-grid wind turbine which has backup power for its pitch system can apply feedback control to ensure that its aerodynamic rotor turns at a suitable speed, continually adjusting the rotor blade pitch angle to maintain a constant low speed in order to achieve a satisfactory degree of aerodynamic damping. The backup power supply of such a wind turbine can be a battery or a local power generator such as an on-board diesel generator and is used when there is no grid to provide power to various actuators and the main computer.

When the backup power supply is depleted, safety regulations require that the wind turbine enters a passive idle mode in order to prevent damage to the wind turbine components. For this reason, the pitch system of a conventional wind turbine is generally realised to have a default position in which the rotor blades are collectively turned to the feathering angle, even in the absence of power. As described above, the ensuing lack of aerodynamic damping in such situations leads to higher fatigue loading on the tower and foundation.

For a typical offshore wind turbine with a monopile foundation, it is estimated that approximately one quarter of total lifetime fatigue accrues during normal environmental conditions during which the wind turbine is non-operational or idling. The supporting components of a wind turbine (tower and foundation) are generally designed to withstand extreme environmental conditions as well as lifetime fatigue, whereby lifetime fatigue may be so significant as to drive the support structure design. A supporting structure such as a monopile foundation may experience high fatigue loads during normal environmental conditions, and the levelized cost of energy (LCOE) will be correspondingly high. Similarly, the design of braces and welds for a jacket-type foundation can be driven by normal operation fatigue accrued during the lifetime of the wind turbine. A jacket structure is cheaper than a monopile, but the feasibility of a jacket design depends directly on the expected fatigue that will accrue during the lifetime of the wind turbine.

It is therefore an object of the invention to provide a way of reducing fatigue loading during a non-operational state of a wind turbine.

This object is achieved by the method of claim 1 of controlling such a wind turbine; and by the wind turbine of claim 8.

In the following, a convention is used in which the pitching range of a rotor blade includes the quadrant commencing at 0° to 90°. During a normal mode of operation, the rotor blade is pitched in a relatively tight range such as -10° to +20°. During a safety mode, the rotor blade is "feathered", i.e. pitched to an angle close to 90° so that the airfoil is in line with the incoming airflow effectively, preventing the rotor from turning.

The inventive method is suitable for implementation by a wind turbine comprising a support assembly and an aerodynamic rotor with a plurality of variable-pitch rotor blades. It may be assumed that the wind turbine under discussion comprises a generator with a rotor shaft that is turned by the aerodynamic rotor, and that these components are mounted at the top of a tower which in turn is mounted on a foundation. The tower and foundation are referred to collectively in the following as the support assembly.

According to the invention, the method of controlling such a wind turbine comprises the steps of determining a maximum fatigue load on the support assembly that would arise with the rotor blades pitched to a feathering angle and determining a mitigated idle mode pitching angle that is smaller than the feathering angle by at least several degrees. The mitigated idle mode pitching angle is chosen to achieve a fatigue load that is at most 95% of the maximum fatigue load. The method further comprises the steps of detecting a condition that requires the wind turbine to be placed in a passive idle mode and subsequently commanding a rotor blade pitch system to pitch the rotor blades to the mitigated idle mode pitching angle.

The mitigated idle mode pitching angle is less severe than the feathering angle and therefore permits a slow rotation of the aerodynamic rotor. In the following, the terms "mitigated idle mode pitching angle" and "mitigated pitching angle" and "intermediate pitch angle" are regarded as synonyms and may be used interchangeably. Similarly, the terms "pitch angle" and "pitch position" may be used interchangeably. The mitigated idle mode pitching angle can be lower than the feathering angle by at least 5°, more preferably by at least 10°. As explained above, the feathering angle is usually 90° or at least very close to 90°.

It may be assumed that a wind turbine controller will take various other appropriate steps in response to the condition that requires the wind turbine to be placed in the idle mode.

With the rotor blades at their feathering angle, the airfoils are positioned essentially parallel to the incoming airflow. In this position, a rotor blade airfoil is largely unaffected by the incoming airflow and is not displaced, i.e. rotation of the aerodynamic rotor is essentially halted. As explained above, a stationary aerodynamic rotor results in the absence of aerodynamic damping for the supporting structure.

An advantage of the inventive method is that the mitigated pitching angle allows a slow rotation of the aerodynamic rotor without compromising the safety of any wind turbine components in the absence of a main power supply. The slow rotation of the aerodynamic rotor achieves a reduction in fatigue load of several percent below the fatigue load associated with a stationary aerodynamic rotor.

With the inventive method, an appropriate choice of mitigated pitching angle can achieve a significant reduction in fatigue loading, in the order of 95% of the fatigue load that would otherwise arise when the rotor blades are pitched at their maximum (i.e. their feathered position) under those operating conditions. It shall be understood that even a reduction of a few percent may be regarded as "significant", since this lower fatigue loading can considerably extend the expected lifetime of an existing support assembly, or can contribute to considerable cost reductions in a planned support assembly.

An advantage of the inventive method is that the wind turbine is permitted to idle passively, but at a pitch angle that is less severe than the feathering pitch angle. The result is that the aerodynamic rotor is allowed to turn, albeit slowly. In this way, the aerodynamic rotor is able to provide some aerodynamic damping, reducing the loads on the support assembly, i.e. the tower and foundation. Because the pitch angles of the rotor blades are relatively large (i.e. much larger than the usual normal-mode range), the rotational speed of the aerodynamic rotor remains within a safe level. This means that the inventive method does not compromise the safety of the wind turbine during a passive idle mode of operation.

When the wind turbine controller detects a condition that necessitates passive idling, it will not pitch the rotor blades to a limit position (i.e. to the feathering angle), but to the more optimal predetermined mitigated idle mode pitching angle. At this optimal pitch angle, the aerodynamic rotor is still able to turn slowly and can therefore provide some aerodynamic damping to the support assembly. This intermediate pitch position (and low rotor speed) can be maintained until the wind turbine is allowed to resume normal operation.

According to the invention, such a wind turbine comprises a rotor blade pitch system configured to pitch the rotor blades according to a pitch reference; and a controller configured to select a mitigated idle mode pitching angle in response to a condition that requires the wind turbine to be placed in a passive idle mode, to compute a pitch reference on the basis of the selected mitigated pitching angle, and to issue the pitch reference to the rotor blade pitch system.

Due to the favourable increase in aerodynamic damping, the lifetime fatigue load on the support assembly is advantageously reduced, and one or more components of the support assembly can be designed at lower cost. For example, the expected reduction in lifetime fatigue load on a jacket structure of a planned wind turbine can translate to a reduced bracket thickness and/or a reduced weld thickness, so that the cost of the jacket structure can be reduced significantly, thereby reducing the LCOE of the wind turbine.

The wind turbine controller continually monitors the situation so that as soon as conditions permit, it will pitch the rotor blades back to a small angle in order to initiate a start-up procedure to resume normal operation. An advantage of the inventive method is that the time required to switch from the mitigated idle mode pitch position to a normal-mode pitch position is less than the time required to switch from the feathering position. This is because the mitigated idle mode pitch angle may be significantly lower than the feathering angle, i.e. fewer steps are necessary to reach a normal-mode pitch position.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the wind turbine is a horizontal-axis wind turbine. It may also be assumed that the aerodynamic rotor has three rotor blades. The hub of the aerodynamic rotor may turn the low-speed shaft of an indirect-drive generator. Equally, the hub of the aerodynamic rotor may turn the rotor of a direct-drive generator. It may be assumed that the generator and various other components are carried by a bedframe or similar structure that is rotatably mounted to the top of a tower. The tower in turn is supported by a foundation. In the case of an offshore wind turbine, the foundation can be a jacket foundation, a tripod foundation, a monopile foundation, etc.

Furthermore, it may be assumed that the rotor blades are pitched collectively so that the rotor blades have essentially the same pitch angle. During a normal mode of operation, the pitch angle of a rotor blade is chosen from within a relatively small range (for example -10° to 20°) for efficient extraction of energy from the wind at a safe rotational velocity. The pitch angle can be adjusted at regular intervals in response to changes in wind speed, in response to an updated power reference, etc.

In the context of the invention, the term "feathered rotor blade" shall be understood to mean a rotor blade that is pitched to its largest possible angle (90° or close to 90°) i.e. to its feathering angle, so that the rotor blade is essentially parallel to the incoming airflow in order to prevent rotation of the aerodynamic rotor. Wind turbine rotor blades are generally feathered as a precaution in a potentially hazardous situation, for example during very high winds, following an internal fault, when the wind turbine is disconnected from the grid, etc. In the following, terms such as "feathering angle", "pitch end position" and "maximum pitch position" are regarded as synonyms and are used interchangeably.

A pitch system can be a hydraulic system, an electric system or a hybrid system. In the following, but without restricting the invention in any way, it may be assumed that the rotor blade pitch system is a hydraulic system. Each rotor blade may be assumed to have a pitch ring about the interior or exterior of its essentially circular root end. A piston of a pitch cylinder (usually a differential cylinder) is arranged to engage with the pitch ring in order to effect a rotation of the rotor blade by a desired amount about its longitudinal axis. The piston is actuated by adjusting the volume of a pressurized hydraulic fluid in the chambers of the pitch cylinder.

The hydraulic pitch system can be controlled by a pitch controller which receives a pitch reference from the wind turbine controller and responds by actuating the relevant valves of the hydraulic circuit to adjust the volume of a pressurized hydraulic fluid in the chambers of the pitch cylinder so that the piston moves the desired position. The valves then maintain their selected state until the wind turbine controller issues a new pitch reference. During normal operation, the valves are powered by the main power supply. To comply with safety requirements, a valve will revert to its default (no power) state in the absence of power. Depending on its position and function in the hydraulic circuit, the default state of a valve is either "normally open" or "normally closed".

In a particularly preferred embodiment of the invention, the rotor blade pitch system is controlled to maintain the mitigated pitch angle for the duration of the passive idle mode condition. In such an idle mode, the wind turbine may not avail of the main power supply and may depend on a backup power supply. Therefore, in a particularly preferred embodiment of the invention, the hydraulic pitch system comprises low-power valves.

An idle mode resulting from a fault may persist for a long time depending on the nature of the fault, so that the backup power supply may deplete before the fault is cleared. Therefore, once the mitigated pitch angle has been set, any adjustments to the pitch angle are preferably avoided as long as the idle mode persists. Maintaining the mitigated pitch angle ensures that the accumulator pressure is not lowered, thereby avoiding the need to feather the rotor blades because of insufficient accumulator pressure. To preserve power, in a preferred embodiment of the invention only the pitch valves of the passive safety system remain energized ("normally on"), while the valves used in normal operation and any isolation valves that inhibit safety system operation are deenergized ("normally off").

Preferably, the rotor blade pitch system is configured to pitch the rotor blades to the feathering angle in the event of depletion of a backup power supply. To this end, the accumulator arrangement is configured to maintain sufficient pressure for the hydraulic cylinder assembly to turn the corresponding rotor blade from its mitigated pitching angle to its feathering angle when the valves return to their default states.

For various reasons, it may be necessary for the wind turbine controller to switch the mode of operation from this damping idle mode to a passive idle mode in which the aerodynamic rotor is halted. These conditions may be regarded as emergency conditions since they arise only infrequently. For example, at very high wind speeds it may be necessary to feather the rotor blades in order to avoid damage to wind turbine components. Also, if a local fault occurs (for example a smoke detector outputs an alarm signal), it may be safer to feather the rotor blades. The controller may also feather the rotor blades if it observes a drop in accumulator pressure of the hydraulic pitch system. Any such emergency situation has priority and will automatically override the damping idle mode, thereby forcing the rotor blades to pitch from the mitigated pitching angle to the feathering position.

In a particularly preferred embodiment of the invention, a mitigated idle mode pitching angle is chosen to allow the aerodynamic rotor to rotate at a velocity that differs - by a sufficiently large margin - from a velocity associated with the tower natural frequency. This lower velocity is optimal in the sense that it avoids tower structural frequencies and therefore contributes to an extension of the wind turbine fatigue life. The mitigated idle mode pitching angle can be chosen from a range such as 60° to 80°.

Therefore, in a particularly preferred embodiment of the invention, the method comprises a step of determining a current wind speed value, for example the most recent ten-minute average wind speed, and wherein the mitigated idle mode pitching angle is determined on the basis of that wind speed value.

In a particularly preferred embodiment of the invention, values of fatigue load under different operating conditions are determined in a prior simulation step. For example, a simulation can determine the maximum fatigue load that is seen by the supporting structure of a specific wind turbine type for any of several wind speed ranges during passive idling with a stationary aerodynamic rotor, i.e. in the absence of any aerodynamic damping. Such a simulation can be carried out for that specific wind turbine type, since rotor blade length, tower height, tower mass etc., are significant factors affecting the fatigue load seen by the supporting structure.

For a specific wind speed, the simulation preferably also determines the fatigue load that is seen by the supporting structure when the aerodynamic rotor is allowed to rotate at a small fraction of its rated velocity, thereby providing some aerodynamic damping. This slow rotational velocity is determined by a pitch angle that is less severe than the feathering angle. In this way, for a specific wind speed (or wind speed range), a relationship can be established between a safe pitch angle and a fatigue load reduction. For example, for decreasing pitch angles, the fatigue load will reduce.

The inventive method preferably also comprises a prior step of compiling a look-up-table for a specific wind turbine type and a set of wind speed values, in which each wind speed value is linked to a set of mitigated idle mode pitching angles, and each mitigated idle mode pitching angle is linked in turn to a fatigue load value.

In a particularly preferred embodiment of the invention, the mitigated idle mode pitching angle is a variable parameter. For example, the mitigated pitching angle may be chosen on the basis of safety requirements that limit the rotational velocity of the rotor during a passive idle mode.

Alternatively, the mitigated pitching angle may be chosen to achieve the greatest possible reduction in fatigue loads during passive idling. In a further preferred embodiment of the invention, the mitigated idle mode pitching angle may be determined on-the-fly by the wind turbine controller. For example, if the wind turbine must exit the normal mode of operation, the controller can use the most recent ten-minute wind speed value as a basis from which to determine a suitable mitigated pitch angle from a look-up table.

The mitigated idle mode pitching angle is maintained as long as the backup power supply is able to provide power to the wind turbine. In an extreme case, should the backup power supply become depleted before normal operation can resume, the rotor blades should be feathered as a safety precaution.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a simplified drawing of an offshore wind turbine;
Figure 2 which shows a rotor blade in cross-section during different modes of operation;
Figure 3 shows a simplified diagram of a control arrangement for a wind turbine according to the invention;
Figure 4 illustrates an exemplary hydraulic pitch system;
Figure 5 is a graph of fatigue reduction against pitch angle;
Figure 6 relates rotational velocity and fatigue load in different modes of operation.

In the diagrams, like numbers refer to like objects throughout. Objects in the diagrams are not necessarily drawn to scale.

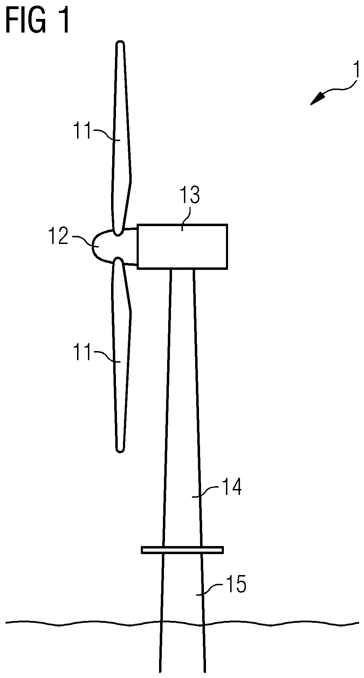

Figure 1 shows a simplified drawing of an offshore wind turbine 1, which has a nacelle 13 mounted atop a tower 14, which in turn is supported by a foundation 15. This can be a monopile foundation as shown here, or a tripod foundation, a jacket foundation, etc. Together, the tower 14 and foundation 15 are the support assembly for the rotor nacelle assembly (RNA) comprising the aerodynamic rotor 11, 12, nacelle and generator. The aerodynamic rotor 11, 12 comprises rotor blades 11 mounted to a hub 12, which turns the generator rotor when the wind turbine is operational.

The support assembly 14, 15 must be constructed to bear the weight of the supported components and also to withstand wind loading and wave loading. When the wind turbine is operational, the rotation of the aerodynamic rotor 11, 12 provides aerodynamic damping to the support assembly 14, 15, i.e. the rotation of the aerodynamic rotor 11, 12 can counteract the wind loading and wave loading to some extent.

When the aerodynamic rotor 11, 12 is stationary, wind loading and wave loading continue to act on the tower and foundation, but the absence of aerodynamic damping means that the support assembly 14, 15 sees the full force of wind loading and wave loading. In poor weather conditions, the loads on the support assembly 14, 15 can be very high. For this reason, the support assembly 14, 15 of a conventionally operated wind turbine must be engineered to withstand the lifetime fatigue load, which adds to the overall cost of the wind turbine.

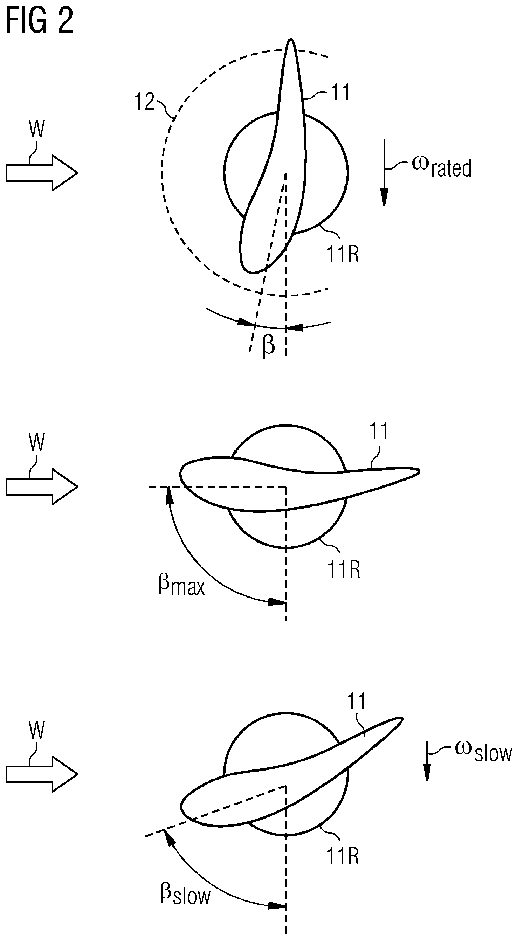

The inventive control method avoids these additional costs and permits construction of a support assembly 14, 15 that experiences a reduced lifetime fatigue load, by recognising a situation that would normally require passive idling with the rotor blades at feathering angle, and by pitching the rotor blades instead to a less severe angle, referred to herein as the mitigated idle mode pitching angle β_{slow}. This is illustrated with the aid of Figure 2, which shows a rotor blade 11 in cross-section, indicating the airfoil in relation to the circular root end 11R and hub 12 for three modes of operation. It may be assumed that the corresponding wind turbine has three such rotor blades 11 arranged equidistantly about the hub 12. In each case, it is assumed that the hub 12 points into the incoming wind W. The upper part of the diagram shows the airfoil at a pitch angle β that allows the rotor blades 11 to extract energy from the wind in a normal mode of operation (the wind turbine is exporting power to connected to the grid). In this normal mode, the aerodynamic rotor turns at the rated rotational velocity ω_{rated} and provides aerodynamic damping to the supporting structure. The pitch angle β can be adjusted depending on the wind speed and various other factors.

The centre of the diagram illustrates a situation in which the wind turbine is in a passive idle mode (the wind turbine may be disconnected from the grid), for example during a severe fault or after depletion of a backup power supply. Here, the rotor blade 11 is pitched to its feather position with an angle βₘₐₓ close to 90°. The effect is to prevent the rotor blade 11 from being displaced by the incoming wind, so that the aerodynamic rotor does not turn or only turns very slowly. The effect of this passive idling is to avoid damage to the aerodynamic rotor from high wind speeds. In this passive idle mode, the aerodynamic rotor is unable to provide aerodynamic damping to the supporting structure, so that the tower and foundation may be subject to high loads.

The inventors have realised that this type of severe situation only occurs during a small fraction of a wind turbine's lifetime, and therefore propose a more efficient way of controlling a wind turbine to exploit the possible contribution of the aerodynamic rotor. The lower part of the diagram illustrates a situation in which the wind turbine is in an idle mode, for example when a fault has led to temporary disconnection from the grid and the wind turbine is powered by a backup power supply. With the inventive method, the rotor blade 11 is pitched to a mitigated idle mode pitch position with an angle β_{slow} that can be significantly smaller than the feathering angle βₘₐₓ. The effect is to allow the aerodynamic rotor to turn at a slow rate ω_{slow}. With this mitigated idle mode pitch position β_{slow}, the aerodynamic rotor 11, 12 is able to provide some aerodynamic damping to the supporting structure 14, 15, so that loading on the tower and foundation is less than the loading seen when the rotor blades are pitched at maximum feathering angle βₘₐₓ. For this reason, the mitigated idle mode pitch position may be referred to as an "optimized pitch angle". This mitigated idle mode pitch position β_{slow} can be maintained as long as the backup power supply can provide power to the valves of the rotor blade pitch systems as will be explained in the following.

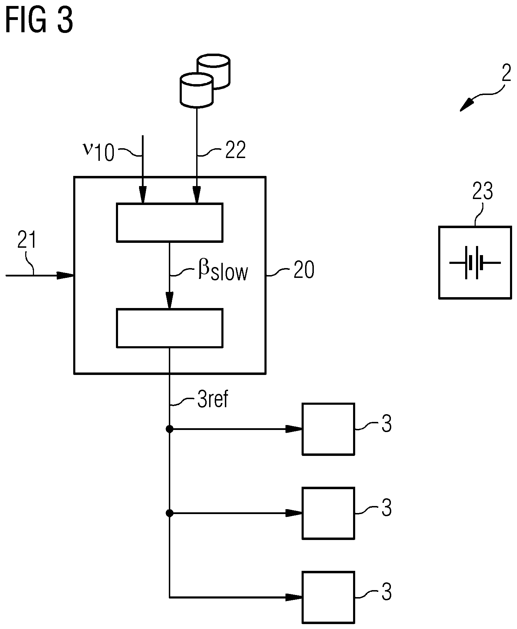

Figure 3 shows a very simplified diagram of a control arrangement 2 of a wind turbine according to the invention, with focus on the relevant control aspect, i.e. pitch control of the rotor blades. The control arrangement 2 comprises a main controller 20 that receives input 21 such as commands and data 21 from a park controller, for example. The main controller 20 also receives relevant operating condition information, for example a ten-minute wind speed reading ν₁₀. The main controller 20 is configured to respond to a condition that requires the wind turbine to be placed in a passive idle mode, for example following a fault or during a maintenance mode. Following such an event, the main controller 20 selects a mitigated idle mode pitch position β_{slow} that can be significantly less than the maximum feathering angle, and issues a corresponding pitch reference 3_{ref} to the pitch system 3 of each rotor blade. The mitigated idle mode pitch position β_{slow} can be selected from a look-up-table 22, for example, which relates wind speed values to suitable pitching angles for that wind turbine type. During the idle mode, the pitch systems 3 may be powered by a backup power supply 23. The pitch reference 3_{ref} derived from the selected mitigated idle mode pitch position β_{slow} remains valid as long as the backup power supply 23 is not depleted.

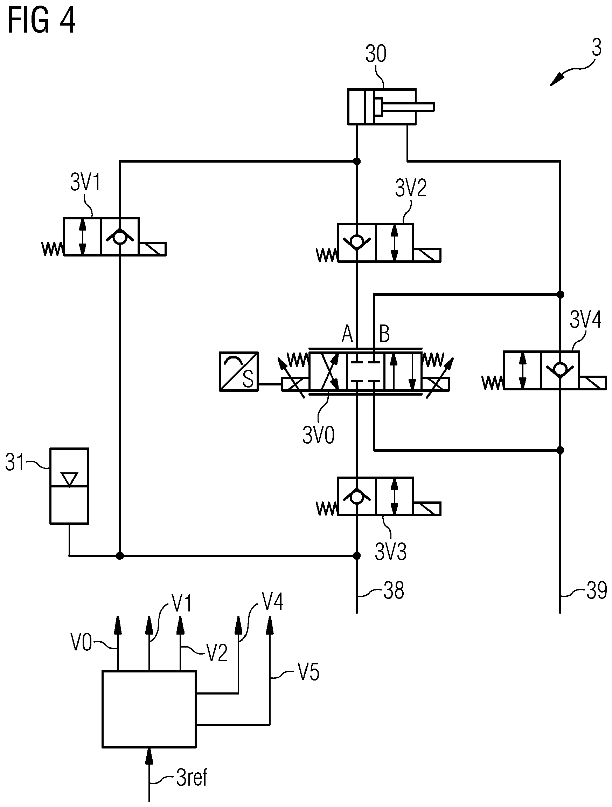

Figure 4 illustrates an exemplary hydraulic pitch system 3. The drawings show a pitch cylinder arrangement 30 (one or more pitch cylinders) arranged to engage with a rotor blade pitch ring (not shown) in order to turn the rotor blade about its longitudinal axis through a specific angular range, for example a quarter turn through 0° - 90°. Each rotor blade of a wind turbine can be equipped with such a hydraulic pitch system 3 so that all rotor blades are collectively pitched at the same angle.

The drawings show a number of valves 3V0, 3V1, 3V2, 3V3, 3V4 and an accumulator arrangement 31 (one or more accumulators). Any pitch reference 3_{ref} received from the main controller is converted into appropriate valve actuation signals V0, V1, V2, V3, V4. A valve actuation signal will open or close the corresponding valve as appropriate.

The hydraulic safety system is defined herein as the system that activates a 'safe pitch' or 'safety pitch' manoeuvre, i.e. a passively-controlled pitch movement towards the feathering position. The hydraulic operational system is defined herein as the system that controls the pitch position in a normal mode of operation, using actively-controlled pitch position reference signals received from the turbine controller. The accumulator arrangement 31 provides pressurized fluid to valves 3V1, 3V4 of the hydraulic safety system and to valves 3V3, 3V2, 3V0 of the hydraulic operational system.

In a normal mode of operation (as illustrated in the upper part of Figure 2 above), valves 3V0, 3V2 and 3V3 are actuated so that the piston of the pitch cylinder 30 is displaced to turn the rotor blade to the desired pitch angle β.

For various reasons, it may be necessary for the wind turbine to be put into an idle mode. In the inventive method, as long as backup power is available, the controller can pitch the rotor blades to the less severe mitigated idle mode pitch position β_{slow} during the idle mode. To this end, valves 3V0, 3V2 and 3V3 are actuated so that the piston of the pitch cylinder 30 is displaced to turn the rotor blade to the specified pitch angle β_{slow}. In this mode, all hydraulic valves 3V1, 3V2, 3V3 and 3V4 and the proportional valve 3V0 are kept closed to ensure that the piston position is maintained, i.e. the rotor blade will be held at that mitigated idle mode pitch position β_{slow}. The aerodynamic rotor can turn at a low rate ω_{safe} as explained in the lower part of Figure 2 and can provide some aerodynamic damping to the supporting structure.

Because valves 3V1, 3V2, 3V3 and 3V4 are closed, there is essentially no leakage from the accumulator arrangement 31 or the pitch cylinder arrangement 30, so that the rotor blade can maintain that optimized pitch angle β_{slow} for a considerable length of time. The hydraulic valves 3V1, 3V4 of the safety system require power to remain in the closed position, and can be powered by the wind turbine backup power supply, e.g. a standard uninterruptible power supply (UPS). The power consumption of the safety system valves 3V1, 3V4 during an idle mode may be in the order of 140 Watt depending on various factors such as valve size.

Sufficient pressure is maintained in the accumulator arrangement 31 so that the rotor blade can be pitched from the optimized pitch angle β_{slow} if necessary to the feathering angle βₘₐₓ or mechanical end stop. In the event of a drop in pressure in the accumulator arrangements 31, or when the backup power supply depletes, the safety system hydraulic valves 3V1, 3V4 will no longer be held closed. The valves 3V1, 3V4 will then open, with the result that the accumulator arrangement 31 then connects to the piston-side chamber of the cylinder 30, with the result that the rotor blade assumes its default or feather position, i.e. its mechanical end stop position βₘₐₓ, and the aerodynamic rotor effectively stops turning.

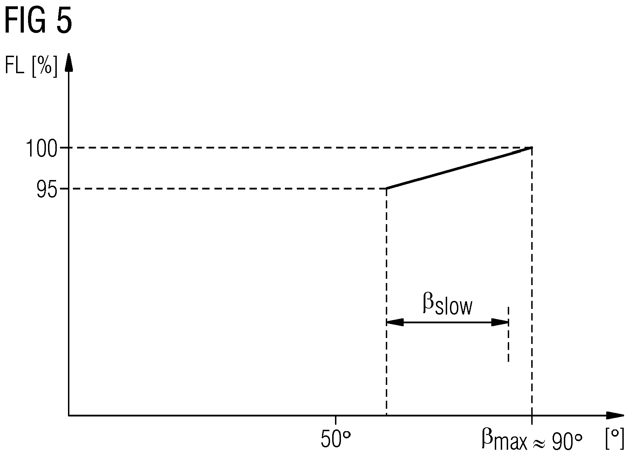

Figure 5 is a graph of fatigue load [%] against pitch angle [°]. The Y-axis shows fatigue as a percentage of maximum fatigue loading, i.e. maximum fatigue loading corresponds to 100%.

At the feathering angle βₘₐₓ, the fatigue loading is at 100% (it follows that fatigue reduction is 0% at feathering angle βₘₐₓ). This maximum fatigue loading FLₘₐₓ for a wind turbine support assembly can be determined in advance through simulation or from measurements obtained from actual wind turbine installations.

In a conventional control method, the rotor blades are generally pitched to feathering angle βₘₐₓ whenever a passive idle mode is announced. In the inventive method, the rotor blades are pitched to a less severe angle, i.e. to the mitigated idle mode pitch angle β_{slow} unless it becomes necessary to apply the feathering angle βₘₐₓ.

With the mitigated idle mode pitch angle β_{slow} chosen from the indicated range, fatigue loading at the tower base can reduce to almost 95% of maximum loading FLₘₐₓ. The inventors have observed an essentially linear relationship between pitch angle and fatigue load reduction during idle mode. This reduction of several percent of maximum fatigue load can be exploited in the design stage to arrive at a significantly more economical support assembly for a wind turbine that will implement the inventive method.

For a typical offshore jacket foundation, the mass of steel used for designing wind-load fatigue-driven components scales linearly with the fatigue levels that the component experiences. Therefore, the mass and cost of wind-load fatigue-driven support structure components can be reduced by at least 4.5% for a wind turbine that will implement the invention.

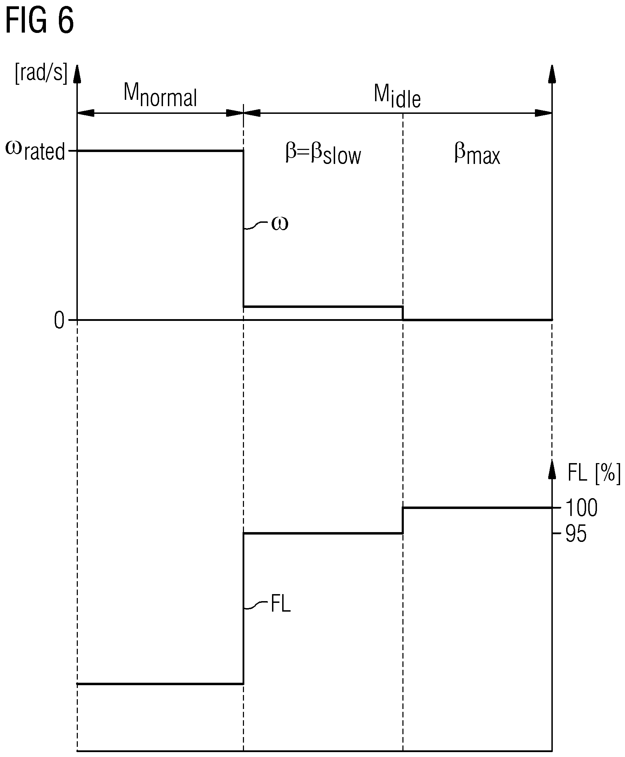

Figure 6 illustrates the inventive method. The upper part of the diagram shows the rotational velocity ω of the aerodynamic rotor during a normal mode Mₙₒᵣₘₐₗ and during a passive idle mode M_{idle}. For example, during a normal mode of operation, the wind turbine can operate at rated power output, with the aerodynamic rotor turning at its rated rotational velocity ω_{rated}.

The lower part of the diagram shows the fatigue load FL (expressed as a percentage of full load) on the support assembly during the normal mode Mₙₒᵣₘₐₗ and during a passive idle mode M_{idle}. During a normal mode of operation, fatigue load is mitigated by aerodynamic damping provided by the aerodynamic rotor.

With the inventive control method, an event requiring a passive idle mode results in the controller generating a pitch reference to pitch the rotor blades to a mitigated idle mode pitch angle β_{slow} (e.g. 70° - 75°) instead of the maximum feathering angle (usually 90°). With this less severe pitch angle β_{slow}, the fatigue load on the support assembly can be a fraction of the maximum fatigue load that would be seen under those operating conditions. For example, the fatigue load may be as low as 0.95 (95%) of the maximum fatigue load that would be seen under those operating conditions.

This mitigated idle mode pitch angle β_{slow} is maintained for the duration of the idle mode, or until a backup power supply is depleted. If idle mode is still required when the backup power is depleted, the pitch system automatically pitches the rotor blades to the feathering angle βₘₐₓ. With the rotor blades pitched at the feathering angle βₘₐₓ, the fatigue load on the support assembly is the maximum fatigue load under those operating conditions, as indicated in the right-hand portion of the diagram. However, by postponing this situation for as long as possible, the length of time in which a support structure must withstand maximum fatigue load can be minimized.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A method of controlling a wind turbine (1), the wind turbine (1) comprising a support assembly (14, 15) and an aerodynamic rotor (11, 12) with a plurality of rotor blades (11), which method comprises the steps of
- determining a maximum fatigue load (FLₘₐₓ) that would act on the support assembly (14, 15) in the absence of aerodynamic damping by the aerodynamic rotor (11, 12);
- determining a mitigated idle mode pitching angle (β_{slow}), which mitigated idle mode pitching angle (β_{slow}) is smaller than the feathering angle (βₘₐₓ);
- detecting a condition that requires the wind turbine to be placed in a passive idle mode (M_{idle}) and subsequently controlling a rotor blade pitch system (2) to pitch the rotor blades (11) to the mitigated idle mode pitching angle (β_{slow}) .

2. A method according to claim 1, wherein the mitigated idle mode pitching angle (β_{slow}) is chosen from the range 60° to 80°.

3. A method according to any of the preceding claims, wherein the mitigated idle mode pitching angle (β_{slow}) permits a rotational velocity (ω_{slow}) that is smaller than the rated rotational velocity (ω_{rated}) of the aerodynamic rotor (11, 12) .

4. A method according to any of the preceding claims, comprising a step of determining a current wind speed value (ν₁₀), and wherein the mitigated idle mode pitching angle (β_{slow}) is determined on the basis of that wind speed value (ν₁₀).

5. A method according to any of the preceding claims, wherein values of maximum fatigue load (FLₘₐₓ) under different conditions are determined in a prior simulation step.

6. A method according to any of the preceding claims, comprising a prior step of establishing a relationship between wind speed and maximum fatigue load (FLₘₐₓ) during an idle mode (M_{idle}), and a subsequent step of compiling a look-up-table (22) relating wind speed values to mitigated idle mode pitching angles (β_{slow}).

7. A method according to any of the preceding claims, wherein the step of controlling the rotor blade pitch system (2) to pitch the rotor blades (11) to the mitigated idle mode pitching angle (β_{slow}) is followed by a step of switching to a backup power supply (P_{backup}).

8. A wind turbine (1) comprising
- an aerodynamic rotor (11, 12) with a plurality of rotor blades (11) mounted to a hub (12);
- a generator comprising a rotor shaft turned by the aerodynamic rotor (11, 12);
- a support assembly (14, 15) configured to support at least the aerodynamic rotor (11, 12) and the generator, which support assembly (14, 15) comprises a tower (14) mounted on a foundation (15); and
- a rotor blade pitch system (3) configured to pitch the rotor blades (11) according to a pitch reference (3_{ref}); and
- a controller (20) configured to select a mitigated idle mode pitching angle (β_{slow}) in response to a condition that requires the wind turbine (1) to be placed in an idle mode (M_{idle}), to compute a pitch reference (3_{ref}) on the basis of the selected mitigated idle mode pitching angle (β_{slow}), and to issue the pitch reference (3_{ref}) to the rotor blade pitch system (3).

9. A wind turbine according to claim 8, wherein the support assembly comprises a tower (14) and a foundation (15).

10. A wind turbine according to any of claims 8 to 9, wherein the wind turbine (1) is located offshore.

11. A wind turbine according to any of claims 8 to 10, wherein the foundation is any of a jacket foundation, a monopile foundation, a floating foundation.

12. A wind turbine according to any of claims 8 to 11, wherein the rotor blade pitch system (3) comprises a hydraulic circuit with
- an accumulator arrangement (31) configured to provide pressurized fluid to the hydraulic circuit;
- a hydraulic cylinder (30) configured to turn a rotor blade pitch ring;
- a valve arrangement (3V0, 3V1, 3V2, 3V3, 3V4) configured to define fluid flow paths in the hydraulic circuit; and
- a pitch system controller (34) configured to actuate the valve arrangement (3V0, 3V1, 3V2, 3V3, 3V4) in response to a pitch reference (3_{ref}) received from a wind turbine controller (20).

13. A wind turbine according to claim 12, wherein the accumulator arrangement (31) is configured to provide sufficient pressure for a hydraulic cylinder assembly (30) to turn the corresponding rotor blade (11) from its mitigated idle mode pitching angle (β_{slow}) to its feathering angle (βₘₐₓ).

14. A wind turbine according to any of claims 8 to 13, wherein the rotor blade pitch system (3) is configured to pitch the rotor blades (11) to the feathering angle (βₘₐₓ) in response to a severe fault.

15. A wind turbine according to any of claims 8 to 14, wherein the rotor blade pitch system (3) is configured to pitch the rotor blades (11) to the feathering angle (βₘₐₓ) in the event of depletion of a backup power supply (β_{backup}).
